# EUROPEAN PATENT SPECIFICATION

(11) **EP 4 261 969 B1**
(45) Date of publication and mention of the grant of the patent: **01.04.2026**
(21) Application number: 22896047.2
(22) Date of filing: 16.11.2022
(51) Int. Cl.: H01M 10/04, H01M 50/466

(54) **AN ELECTRODE ASSEMBLY MANUFACTURING METHOD**
VERFAHREN ZUR HERSTELLUNG EINER ELEKTRODENANORDNUNG
PROCÉDÉ DE FABRICATION D'UN ENSEMBLE D'ÉLECTRODES

(30) Priority: 16.11.2021 KR 20210157429; 15.11.2022 KR 20220152709
(43) Date of publication of application: 18.10.2023
(73) Proprietor: LG Energy Solution, Ltd., Seoul 07335 (KR)
(72) Inventor: AHN, Gyu Dae, Daejeon 34122 (KR)
(74) Representative: Plasseraud IP
(86) International application number: PCT/KR2022/018062
(87) International publication number: WO 2023/090842

(56) References cited:
- JP-A- 2004 179 050
- KR-A- 20150 056 229
- KR-A- 20180 050 133
- KR-A- 20190 023 649
- KR-A- 20200 109 042
- KR-A- 20210 074 026

## Description

### [Technical Field]

This application claims the benefit of a priority based on Korean Patent Application No. 10-2021-0157429 filed on November 16, 2021 and Korean Patent Application No. 10-2022-0152709 filed on November 15, 2022.

An aspect of the present invention relates to a manufacturing method of an electrode assembly having a structure in which an end of a separator protruding from an electrode is heat-sealed in a state that is bent downward opposite to the stacking direction of the electrode assembly.

### [Background Technology of the Invention]

In general, unlike a primary battery that cannot be charged, a secondary battery refers to a battery that can be charged and discharged, and such a secondary battery is widely used in the field of high-tech electronic devices such as phones, laptops, camcorders, etc.

The secondary battery is classified into a can-type secondary battery in which an electrode assembly is embedded in a metal can, and a pouch-type secondary battery in which an electrode assembly is embedded in a pouch-type battery case.

A pouch-type secondary battery includes an electrode assembly, an electrode lead coupled to the electrode assembly, and a pouch-type battery case accommodating the electrode assembly in a state in which the tip of the electrode lead is drawn out, and the electrode assembly in a state in which the tip of the electrode lead is drawn out, and the electrode assembly has a structure in which the electrode and the separator are alternately stacked. Here, since the separator is cut to a size sufficient to cover the entire surface of the electrode, the separator protrudes from the end of the electrode assembly.

A pouch-type secondary battery is manufactured by accommodating an electrode assembly inside a pouch-type battery case and then sealing the battery case by pressurizing an area to be sealed at a high temperature using a sealing member. In addition, during the sealing process, a so-called separator wrinkling phenomenon may occur in which the separator protruding from the electrode assembly interferes with and adheres to the sealing area of the battery case.
Documents KR20150056229A, KR20210074026, KR20190023649, KR20200109042 provide examples of manufacturing methods of electrode assemblies.

A pouch-type battery case is usually a laminate sheet composed of an inner coating layer, a metal layer, and an outer coating layer, and by pressurizing an area to be sealed at a high temperature, the inner coating layer of the corresponding area is melted and the two layers of the battery case are heat-sealed. However, when the area to be sealed is pressurized at a high temperature, not only the inner coating layer of the battery case, but also the binder component of the separator melts together, so that the inner coating layer of the battery case and the separator can be sealed together, and this phenomenon is called a separator wrinkling.

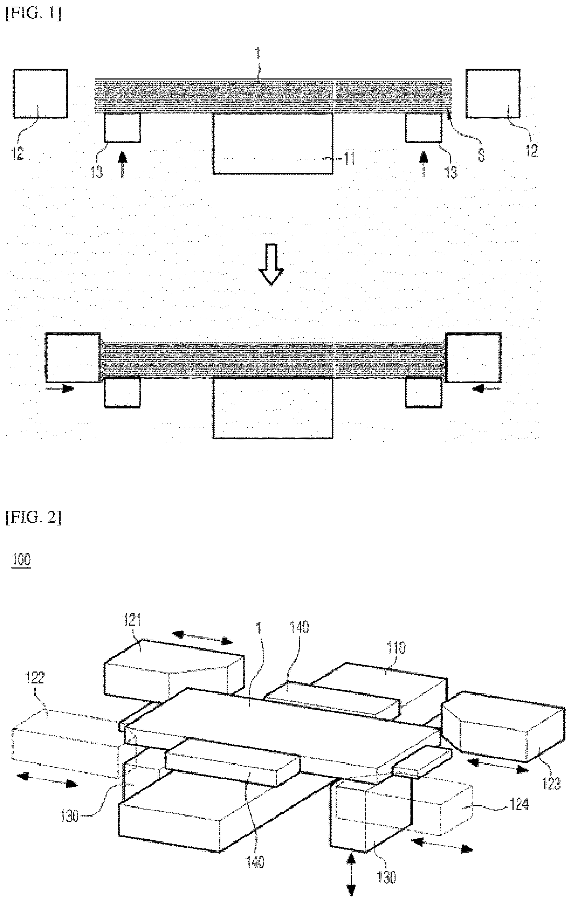

In a secondary battery in which the separator wrinkling has occurred, when the secondary battery drifts for various reasons such as external physical impact, the internal electrode assembly drifts and the drifting force is transmitted to the inner coating layer of the battery case bonded to the electrode assembly, causing damage such as cracks to the inner coating layer, which then leads to insulation failure of the battery case.
Referring to FIG. 1, conventionally, when an electrode assembly 1 is transported to the sealing position by a conveyor 11, a pair of lower supports 13 located below both distal ends of the electrode assembly 1 in the longitudinal direction is raised and turned into a state in which both distal ends of the electrode assembly 1 are supported, and in this state, a sealing block 12 having a predetermined temperature moves forward toward the electrode assembly 1 in the direction of the arrow and heat-seals the separator by heating the end of the separator S of the electrode assembly. However, as shown in FIG. 1, when the end of the separator is heat-sealed in this process, part of the separator is heat-sealed in an upwardly bent state, and the other part is heat-sealed in a downwardly bent state.

When the downward and upward directions of bending of the separator are present, part of the separator is unfolded again according to the bending direction during the sealing process of the battery case, causing the separator to wrinkle.

### [Description of the Invention]

### [Technical Problem]

In order to solve such a conventional problem, the present technology is directed to provide a manufacturing method, in which wrinkling of a separator is prevented during sealing of a battery case by controlling the heat-sealing direction of the separator in a downward direction.

### [Technical Solution]

The present invention provides an electrode assembly manufacturing method as defined in claim 1, preferred embodiments are defined in dependent claims 2-7. The electrode assembly manufacturing device according to an exemplary embodiment of the present invention includes: a transfer unit for transferring an electrode assembly, in which multiple electrodes and separators are alternately stacked, to a sealing position; multiple sealing blocks configured to be able to move forward toward the electrode assembly transferred to the sealing position, and seal the ends of multiple separators by heating and pressing; and a pair of lower supports located below both distal ends of the electrode assembly in the longitudinal direction, and supporting both distal ends of the electrode assembly in the longitudinal direction by moving up to seal the separator; and a control unit for controlling the operation of the transfer unit, the sealing block, and the lower support. The control unit controls the lower support to be moved up in a first state in which the sealing block is moved forward toward the electrode assembly, and as the lower support moves up, both distal ends of multiple separators in the longitudinal direction are bent downward and sealed while contacting the sealing block. The control unit controls the lower support to be moved down after the first state.

In the electrode assembly manufacturing device according to an exemplary embodiment of the present invention, the first state may be a state in which multiple sealing blocks are mutually moved forward so that the distance between the sealing block located on one side and the sealing block located on the other side is smaller than the length of the separator in the longitudinal direction and greater than the length of the electrode in the longitudinal direction, with respect to the longitudinal direction of the electrode assembly.

In the electrode assembly manufacturing device according to an exemplary embodiment of the present invention, the transfer unit may include a conveyor on which the electrode assembly is disposed, and the conveyor may be configured to transfer the electrode assembly in a state in which the electrode assembly is disposed so that the longitudinal direction of the electrode assembly perpendicularly intersects the transferring direction of the conveyor.

In the electrode assembly manufacturing device according to an exemplary embodiment of the present invention, the width of the conveyor may be smaller than the length of the electrode assembly in the longitudinal direction, so that the electrode assembly disposed on the conveyor is bent along the longitudinal direction, thereby both distal ends in the longitudinal direction are located below the height of the contact surface between the conveyor and the electrode assembly.

In the electrode assembly manufacturing device according to an exemplary embodiment of the present invention, each of the multiple sealing blocks may have a "¬" shape corresponding to the shape of the corner part of the electrode assembly.

In the electrode assembly manufacturing device according to an exemplary embodiment of the present invention, each of the multiple sealing blocks may have a curved surface shape in contact with the corner part of the electrode assembly.

In the electrode assembly manufacturing device according to an exemplary embodiment of the present invention, the multiple sealing blocks may be composed of four sealing blocks.

The electrode assembly manufacturing device according to an exemplary embodiment of the present invention may further comprises a pair of alignment blocks for aligning the electrode assembly, and wherein the pair of alignment blocks is disposed on the transfer unit and is spaced apart from each other by a distance corresponding to the length of the electrode assembly in the width direction, and the electrode assembly may be placed within the spacing between the alignment block.

In the electrode assembly manufacturing device according to an exemplary embodiment of the present invention, the alignment block may have a bar or cuboid shape and extends along the longitudinal direction of the electrode assembly.

The electrode assembly manufacturing method according to an exemplary embodiment of the present invention includes: (a) a transferring step of transferring the electrode assembly, in which multiple electrodes and separators are alternately stacked, to the sealing position; (b) a first step in which a sealing block located on one side of the electrode assembly in the longitudinal direction and a sealing block located on the other side of the electrode assembly in the longitudinal direction are moved forward in the direction of the mutual electrode assembly at predetermined distance; and (c) a second step in which as both distal ends in the longitudinal direction of the electrode assembly are raised by the support that moves up and down toward the electrode assembly from the lower part of electrode assembly, the separator at both distal ends is bent downward and sealed while contacting the multiple sealing blocks.

In the electrode assembly manufacturing method according to an exemplary embodiment of the present invention, the predetermined distance in the first step of (b) may be smaller than the length of the separator in the longitudinal direction and greater than the length of the electrode in the longitudinal direction.

In the electrode assembly manufacturing method according to an exemplary embodiment of the present invention, the transferring step (a) may transfer the electrode assembly to the sealing position while being disposed on the conveyor.

In the electrode assembly manufacturing method according to an exemplary embodiment of the present invention, the second step (c) may have the support moving up and down in a state in which the multiple sealing blocks are moved forward at a predetermined distance by the first step (b).

In the electrode assembly manufacturing method according to an exemplary embodiment of the present invention, the second step of (c) may have the sealing blocks heat the separator in contact with the sealing blocks to a predetermined temperature so that the binder component of the separator is melted, thereby forming an adhesive strength.

In the electrode assembly manufacturing method according to an exemplary embodiment of the present invention, there may be an additional alignment step of aligning the electrode assembly between the transferring step (a) and the first step (b).

In the electrode assembly manufacturing method according to an exemplary embodiment of the present invention, after the second step (c), it may further include: a step of moving back the multiple sealing blocks that have moved forward in the first step to their original positions; a step of lowering the lower support, which has moved upward in the second step, to its original position; and a step of taking the electrode assembly sealed with the separator out from the sealing position.

According to an aspect of the present invention, an electrode assembly in which multiple electrodes and separators are alternately stacked is provided, wherein a separator protruding from an end of the electrode has its distal end bent downward opposite to the stacking direction.

In addition, according to an aspect of the present invention, a pouch-type secondary battery characterized by having an electrode assembly accommodated in the accommodating unit of the pouch-type battery case is provided, and the electrode assembly has a structure in which multiple electrodes and separators are alternately stacked, the separator protruding from the end of the electrode is in a state in which its end is bent in the first direction, and the accommodating part of the pouch-type battery case protrudes on a plane, and protrudes in a direction opposite to the first direction.

### [Advantageous Effects]

Since the electrode assembly manufacturing device and manufacturing method according to the present disclosure heat-seal the end of the separator in a downwardly bent state, it is possible to manufacture an electrode assembly and a lithium secondary battery in which the separator is prevented from wrinkling when sealing a pouch-type battery case.

### [Brief Description of the Drawings]

FIG. 1 is a diagram for explaining problems of a conventional manufacturing method of an electrode assembly.
FIG. 2 is a perspective view of an electrode assembly manufacturing device according to an exemplary embodiment of the present invention.
FIG. 3 is a top view of an electrode assembly manufacturing device according to an exemplary embodiment of the present invention.
FIG. 4 is a conceptual diagram for explaining the effect according to the operation sequence of a sealing block and a lower support.
FIG. 5 is a perspective view of a sealing block according to an exemplary embodiment of the present invention.
FIG. 6 is a perspective view of a sealing block according to another exemplary embodiment of the present invention.
FIG. 7 is a diagram illustrating a pouch-type secondary battery according to an exemplary embodiment of the present invention.
FIG. 8 is a cross-sectional view taken along line A-A' of FIG. 7.
FIG. 9 is an enlarged view of a part of FIG. 8.
FIG. 10 is a diagram showing a process of accommodating an electrode assembly in a battery case and sealing the battery case during the manufacturing process of a pouch-type secondary battery according to an exemplary embodiment of the present invention.

### [Reference Numerals]

1: ELECTRODE ASSEMBLY
10, 100: ELECTRODE ASSEMBLY MANUFACTURING DEVICE
11, 110: TRANSFER UNIT
12, 120, 121-124, 220: SEALING BLOCK
13, 130: LOWER SUPPORT
140: ALIGNMENT BLOCK

### [Detailed Description]

The present invention may have various modifications and various examples, and thus specific examples are illustrated in the drawings and described in detail in the description. However, it should be understood that the present invention is not limited to specific embodiments, and includes all modifications, equivalents or alternatives within the spirit and technical scope of the present invention.

In the present specification, the X-axis direction corresponds to the longitudinal direction of the electrode assembly and the width direction of the conveyor, the Y-axis direction corresponds to the width direction of the electrode assembly and the transferring direction of the conveyor, and the Z-axis direction corresponds to the up-and-down movement direction of the lower support.

Hereinafter, the electrode assembly manufacturing device of embodiments of the present invention will be described in detail.

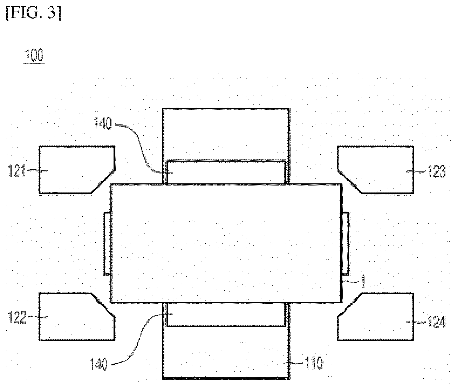

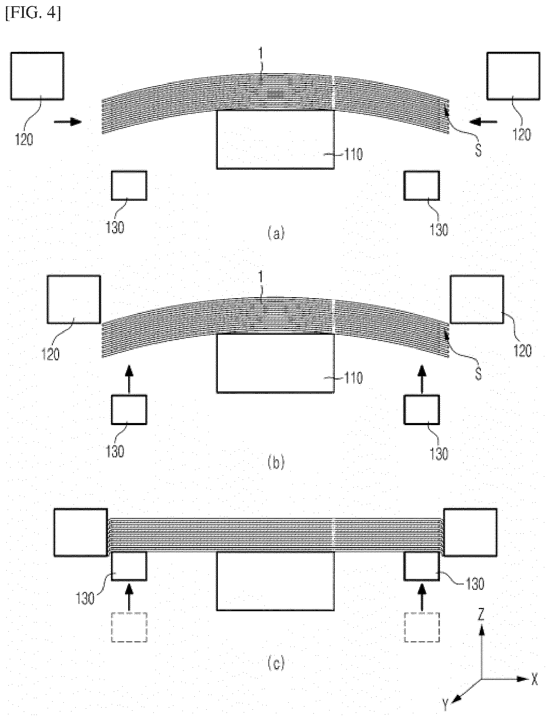

FIG. 2 is a perspective view of an electrode assembly manufacturing device according to an exemplary embodiment of the present invention, FIG. 3 is a top view of an electrode assembly manufacturing device according to an exemplary embodiment of the present invention, and FIG. 4 is a conceptual diagram for explaining the effect according to the operation sequence of the sealing block and the lower support.

Referring to these diagrams, the electrode assembly manufacturing device 100 according to an exemplary embodiment of the present invention includes: a transfer unit 110 for transferring an electrode assembly 1, in which multiple electrodes and separators are alternately stacked, to a sealing position; multiple sealing blocks 120; 121-124 configured to be able to move forward toward the electrode assembly 1 transferred to the sealing position, and seal the ends of multiple separators by heating and pressing; and a pair of lower supports 130 located below both distal ends of the electrode assembly in the longitudinal direction (X-axis direction), and supporting both distal ends of the electrode assembly in the longitudinal direction by moving up and down to seal the separator; and a control unit (not illustrated) for controlling the operation of the transfer unit 110, the sealing block 120, and the lower support 130.

The control unit controls the lower supports 130 to be moved up in a first state in which the sealing block 120 is moved forward toward the electrode assembly 1, and as the lower support 130 moves up, both distal ends of multiple separators in the longitudinal direction are bent downward and heat-sealed while contacting the sealing block 120.

Here, the first state refers to a state in which the multiple sealing blocks 120; 121-124 are in close proximity to the electrode assembly so as to be able to come into contact with the ends of the separator at both distal ends in the longitudinal direction of the electrode assembly.

Referring to FIG. 4, a process in which the end of the separator is heat-sealed by the electrode assembly manufacturing device according to an embodiment of the present invention will be described. Typically, since the length of the separator S within the electrode assembly 1 in the longitudinal direction (X-axis direction) is longer than the length of the electrode in the longitudinal direction, the distal end of the separator protrudes beyond the distal end of the electrode. The electrode assembly manufacturing device according to an embodiment of the present invention is for heat-sealing the distal end of the protruding separator S to a state of being bent in one direction.

Part (a) of FIG. 4 shows a state in which the electrode assembly 1 is transferred to the sealing position by the transfer unit 110. At this time, the width (X-axis direction) of the means (e.g., a conveyor) on which the electrode assembly 1 is placed in the transfer unit 110 may be configured to be smaller than the length in the longitudinal direction (X-axis direction) of the electrode assembly. Accordingly, the central part of the electrode assembly is supported by the disposition means of the transfer unit 110, but the corner part on both sides of the electrode assembly located outside the disposition means of the transfer unit 110 does not have means of support, so it may be gently curved in a shape of an arch along the longitudinal direction (X-axis direction) due to the weight of the electrode assembly itself.

When the electrode assembly 1 is transferred to the sealing position, the control unit 140 controls the sealing block 120 to move forward toward the electrode assembly 1, so that the electrode assembly manufacturing device 100 turns into the first state as shown in part (b) of FIG. 4. In the first state, the distance between the sealing blocks 120 may be set to be smaller than the length of the separator in the longitudinal direction and greater than the length of the electrode in the longitudinal direction.

In the first state, the control unit 140 controls the lower support 130 located below the electrode assembly 1 to move up. As the lower support 130 moves up, the electrode assembly 1 that has been bent in a shape of an arch gradually straightens, and both distal ends of the separator come into contact with the sealing block 120 and bends downward, which is the opposite direction to the up direction of the lower support 130, and is heated and pressed by the high-temperature sealing block 120 as both distal ends of the separator are heat-sealed in a downwardly bent state, as shown in part (c) of FIG. 4.

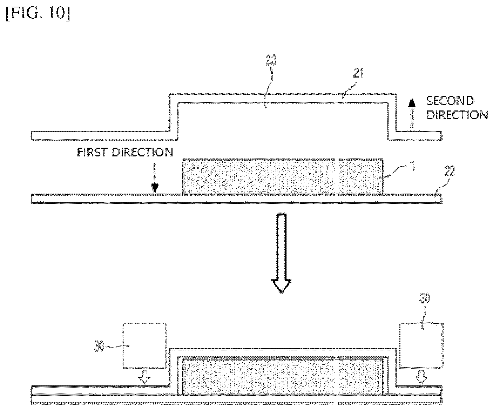

As such, the electrode assembly manufactured by the electrode assembly manufacturing device of the embodiments of present invention is heat-sealed in a state in which the bending direction of the distal end of the separator is uniformly bent downward. In addition, the electrode assembly heat-sealed with the distal end of the separator bent downward has an effect of preventing the separator from being wrinkled. This will be described later with reference to FIG. 10.

The transfer unit 110 may include a conveyor on which the electrode assembly 1 is placed, and it may further include a transfer unit controller (not illustrated) that stops the transferring operation of the conveyor by the driving unit when the driving unit (not illustrated) that moves the conveyor in the transferring direction and the electrode assembly placed on the conveyor are transferred to a sealing position, and resumes the transferring operation of the conveyor once the sealing of the separator of the electrode assembly is completed.

In placing the electrode assembly on the conveyor, the electrode assembly is placed on the conveyor such that the longitudinal direction of the electrode assembly perpendicularly intersects the transferring direction of the conveyor (Y-axis direction in FIG. 3). The length in the longitudinal direction of the electrode assembly placed in this way is longer than the width (X-axis direction in FIG. 3) of the conveyor.

In the embodiments of present invention, the width of the conveyor is smaller than the length of the electrode assembly in the longitudinal direction, so that the electrode assembly does not form a straight line along the longitudinal direction and is gently bent, as shown in pats (a) & (b) of FIG. 4. And both distal ends in the longitudinal direction of the electrode assembly, which are not supported by the conveyor, are naturally located below the height of the contact surface between the conveyor and the electrode assembly due to the weight of the electrode assembly.

Accordingly, since both distal ends of the electrode assembly in the longitudinal direction are positioned below the sealing block, even if the sealing block moves forward toward the electrode assembly for sealing and turns into the first state, both distal ends of the electrode assembly in the longitudinal direction maintain a non-contact state with the sealing block and is located below the sealing block.

The first state is a state in which multiple sealing blocks are in close proximity to the electrode assembly so as to be able to contact the separator protrusions at both distal ends of the electrode assembly in the longitudinal direction. In one specific example, the first state is a state in which sealing blocks are mutually moved forward so that the distance between the sealing block located on one side and the sealing block located on the other side is smaller than the length of the separator in the longitudinal direction and greater than the length of the electrode in the longitudinal direction, with respect to the longitudinal direction of the electrode assembly.

In the first state as described above, when the lower support located below the electrode assembly moves upward, both distal ends of the electrode assembly rise in a state supported by the support, and the separators at both distal ends come into contact with the sealing block. Here, the length of the separator between the sealing block on one side and the sealing block on the other side in the longitudinal direction is greater than the distance between the sealing blocks, and since both distal ends of the electrode assembly are in a state of being gently bent by the load, as shown in FIG. 4, while both distal ends of the electrode assembly are raised, the separator in contact with the sealing block is naturally bent downward and sealed.

The multiple sealing blocks 120 are for heat-sealing both distal ends of multiple separators in the longitudinal direction, and are provided on one side 121, 122 and the other side 123, 124 of the electrode assembly in the longitudinal direction, respectively. FIG. 2 and FIG. 3 illustrate an embodiment in which the sealing block is composed of four sealing blocks, two of which are located on one side and two on the other side in the longitudinal direction of the electrode assembly, but is not limited thereto.

The sealing blocks 121, 122 provided on one side and the sealing blocks 123, 124 provided on the other side are configured to be able to move forward toward the electrode assembly or move backward in the opposite direction so as to be in the first state, which is an appropriate position for sealing the separator.

Multiple sealing blocks have a predetermined temperature, and accordingly, the sealing blocks heat and press both distal ends of the separator in the longitudinal direction, thereby effectively bending and heat-sealing the distal end of the separator.

In one specific example, each of the multiple sealing blocks may have a coating layer formed so that the pressing surface is not stained with the binder component of the separator, and the coating layer may be made of silicon (Si) or Teflon. Accordingly, the sealing block can save the trouble of cleaning the pressing surface every time.

Meanwhile, the multiple sealing blocks may further include a position adjusting unit (not illustrated) for adjusting the position so that the electrode assembly is disposed at the center of the sealing block on one side and the sealing block on the other side, and when the electrode assembly is transferred to the sealing position, the position adjusting unit photographs the electrode assembly and the sealing block from the top, checks the center line of the press block and the center line of the electrode assembly in the photographed image, and may allow the sealing block to move forward or backward in the direction of the arrow in FIG. 2 in order to match the center lines.

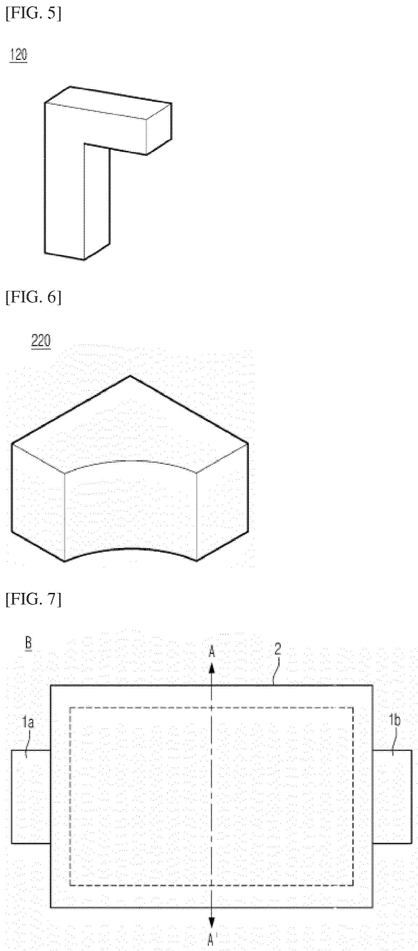

FIG. 5 shows the shape of a sealing block according to an exemplary embodiment. Referring to FIG. 5, each of the multiple sealing blocks may have a "¬" shape corresponding to the shape of a corner part of the electrode assembly. The corner part refers to a part around the vertex of the electrode assembly in the longitudinal direction, and as the sealing block has an "L" shape, the separator protruding from the electrode can be effectively bent and sealed.

FIG. 6 shows the shape of a sealing block according to another exemplary embodiment. Referring to FIG. 6, each of the multiple sealing blocks has a curved surface shape in contact with the corner part of the electrode assembly. Accordingly, when heating and pressing by the sealing block, damage to the separation membrane can be prevented.

The lower supports 130 are for bending the separator, and the lower supports may be configured as a pair to support both distal ends of the electrode assembly in the longitudinal direction.

The lower support 130 is controlled to be moved upward to support both distal ends of the electrode assembly in the longitudinal direction after the sealing block moves to the first state in order to bend the separator downward.

In one specific example, the electrode assembly manufacturing device 100 of an embodiment of the present invention may further include a pair of alignment blocks 140 for aligning the electrode assembly 1. The alignment block 140 guides some of the electrodes or some separators that are arranged out of alignment with the alignment direction of the electrode assembly 1 to be properly aligned. Accordingly, the height of the alignment block may correspond to the total thickness of the electrode assembly or may be slightly higher than the total thickness of the electrode assembly.

Referring to FIG. 2 and FIG. 3, the pair of alignment blocks 140 may have a bar shape, or may extend along the entire longitudinal direction (X-axis direction) of the electrode assembly 1.

Also, in one specific example, the pair of alignment blocks 140 are disposed on the transfer unit 110, and are spaced apart by a distance corresponding to the width of the electrode assembly 1(Y-axis direction).

Hereinafter, the electrode assembly manufacturing method of the embodiments of present invention will be described in detail.

As illustrated in FIG. 2 to FIG. 4, The electrode assembly manufacturing method according to an exemplary embodiment of the present invention includes: (a) a transferring step of transferring the electrode assembly, in which multiple electrodes and separators are alternately stacked, to the sealing position; (b) a first step in which a sealing block located on one side of the electrode assembly in the longitudinal direction and a sealing block located on the other side of the electrode assembly in the longitudinal direction are moved forward in the direction of the mutual electrode assembly at predetermined distance; and (c) a second step in which as both distal ends in the longitudinal direction of the electrode assembly are raised by the support that moves up toward the electrode assembly, the separator at both distal ends is bent downward and sealed while contacting the multiple sealing blocks.

The step (a) is a step of transferring the electrode assembly 1 in a state in which multiple electrodes and separators are alternately stacked to a sealing position suitable for sealing by multiple sealing blocks 120; 121-124 and a pair of supports.

In one specific example, in the step (a) of transferring, the electrode assembly may be transferred to a sealing position in a state in which the electrode assembly is placed on a conveyor.

In addition, the width of the conveyor is adjusted to be smaller than the length of the electrode assembly in the longitudinal direction of the electrode assembly, so that both distal ends are located below the height of the conveyor by being bent downward along the longitudinal direction of the electrode assembly by its own load.

The step (b) is a step of moving the sealing blocks 120; 121-124 located on both sides of the electrode assembly forward in the direction of the electrode assembly at a predetermined distance so that the distance between one another is narrowed.

The predetermined distance means a distance between sealing blocks that contact the separator to heat and press the separator, but do not contact the electrode, and specifically, it can be a distance smaller than the separator in the longitudinal direction and greater than the electrode in the longitudinal direction. Accordingly, multiple sealing blocks can stably press and bend both distal ends of the separator in the longitudinal direction, and since both distal ends of the electrode in the longitudinal direction are not pressed, deformation of the electrode can be prevented.

Meanwhile, between the transfer step (a) and the first step (b), an alignment step of aligning the electrode assembly may be further included. Some of the electrodes or separators constituting the electrode assembly may be misaligned with the alignment direction of the electrode assembly, and through the alignment step, misaligned electrodes or separators can be correctly aligned, thereby preventing separator sealing failure.

The second step (c) allows the support to move up in a state in which multiple sealing blocks are moved forward at a predetermined distance by the first step (b), so that both distal ends of the separator come into contact with the sealing blocks.

That is, in a state in which multiple sealing blocks are moved toward the electrode assembly at a predetermined distance, the separator having a length longer than the distance between multiple sealing blocks comes into contact with the sealing block by the upward movement of the lower support that rises as it supports both distal ends of the electrode assembly. And both distal ends of the separator are in contact with the fixed sealing block during contact, so that both distal ends of the separator are bent downward, and the separators are sealed (adhered) to each other.

In the second step (c), as the sealing block has a set temperature, both distal ends in the longitudinal direction of the separator in contact with the sealing block are heated, thereby adhesive strength is formed by melting the binder component of the coating layer applied to both distal ends of the separator.

Here, the set temperature may be 60°C to 90°C. If the set temperature is less than 60°C, it is difficult to melt the coating layer applied to the separator, conversely, if the set temperature exceeds 90°C, the separator may shrink and deform, which is not desirable.

As described above, after sealing the separators at both distal ends of the electrode assembly by the operation of the sealing block and the lower support, a step of moving back the multiple sealing blocks that have moved forward in the first step (b) to their original positions; a step of lowering the lower supports, which has moved upward in the second step (c), to its original position; and a step of taking the electrode assembly sealed with the separator out from the sealing position may be sequentially performed.

As such, in the electrode assembly manufacturing method according to the embodiments of present invention, as the lower supports rise they support both distal ends of the electrode assembly in a state in which the sealing blocks sealing the separators at both distal ends of the electrode assembly in the longitudinal direction are moved forward at a predetermined distance, the separators at both distal ends are sealed in a downwardly bent state as they come into contact with the sealing block, thereby an electrode assembly in which wrinkling of the separator is prevented during a pouch sealing can be manufactured.

Hereinafter, the electrode assembly according to embodiments of the present invention will be described in detail.

The electrode assembly according to embodiments of the present invention has a structure in which multiple electrodes and multiple separators are alternately stacked.

Here, the electrode may be a cathode or an anode, and the separator has a larger area than that of the electrode in order to prevent a short circuit between the cathode and the anode. In other words, both distal ends of the of the electrode assembly in the longitudinal direction and both distal ends of the electrode assembly in the width direction protrude beyond both distal ends of the electrode in the longitudinal direction and both distal ends of the electrode in the width direction, respectively, so that it can prevent a short circuit.

Particularly, multiple separators protruding from both distal ends of the electrode in the longitudinal direction are adhered to each other in a bent state by a binder component of the separator. In the electrode assembly of embodiments of the present invention, the separators at both distal ends in the longitudinal direction are heat-sealed in a downwardly bent state, and thus there is an effect of preventing the separator from being wrinkled when sealing a pouch-type battery case, especially, that of a single cup model.

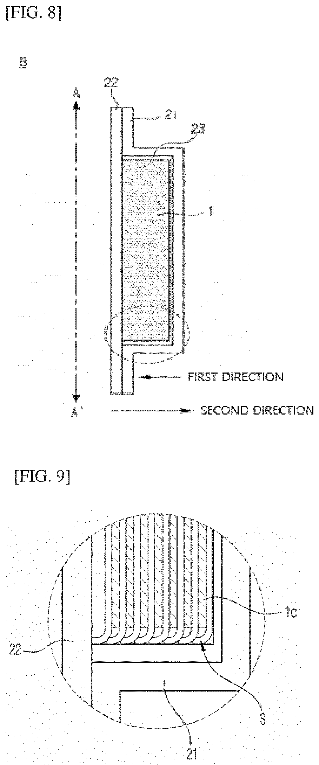

FIG. 7 is a diagram illustrating a pouch-type secondary battery according to an exemplary embodiment of the present invention, FIG. 8 is a cross-sectional view taken along line A-A' of FIG. 7, FIG. 9 is an enlarged view of a part of FIG. 8, and FIG. 10 is a diagram showing a process of accommodating an electrode assembly in a battery case and sealing the battery case during the manufacturing process of a pouch-type secondary battery according to an exemplary embodiment of the present invention.

Referring to these diagrams, a pouch-type secondary battery B according to an exemplary embodiment of the present invention includes an electrode assembly 1 and a pouch-type battery case 2 accommodating the electrode assembly therein, and the electrode assembly 1 is sealed by sealing the outer periphery of the accommodating part 23 using a sealing member 30 while being accommodated in the accommodating part 23 of the pouch-type battery case 2.

As described above, the electrode assembly 1 may have a structure in which multiple electrodes 1c and multiple separators S are alternately stacked, and the separators S protruding from the end of the electrode are sealed in a state of being bent in the first direction.

The pouch-type battery case 2 may have a structure in which a lower case 22 and an upper case 21 covering the lower case 22 are integrally formed, and the lower case 22 and the upper case 21 may respectively have a laminate structure in which an inner coating layer, a metal layer, and an outer coating layer are stacked in order.

In either one of the upper case 21 and the lower case 22, an electrode assembly accommodating part 23 having an indented interior is provided for accommodating the electrode assembly, so that a pouch-type secondary battery B can be manufactured by accommodating the electrode assembly 1 in the accommodating part 23, folding by bending the contact surface of the lower case 22 and the upper case 21, and forming a sealing part that heat-seals along the outer periphery of the accommodating part 23 of the electrode assembly using the sealing member 30.

In one specific example, referring to FIG. 10(a), when disposing the electrode assembly on the lower case 22, it is disposed so that the first direction, which is the direction in which the distal end of the separator is bent, faces the bottom of the lower case 22. Thereafter, the sealing process of the battery case is performed after covering the lower case 22 with the upper case 21 so that the electrode assembly 1 is accommodated in the accommodating part 23 provided in the upper case 21. At this time, the accommodating part 23 protrudes on a plan view, and the protruding direction of the accommodating part 23 protrudes in a second direction opposite to the first direction.

Referring to FIG. 10(b), the upper case 21 and the lower case 22 are heat-sealed by heating/pressing the area to be sealed of the outer periphery of the accommodating part 23 using the sealing member 30 to melt each inner coating layer of the upper case 21 and the lower case 22. Since the electrode assembly accommodating part 23 is provided in the upper case 21 protrudes in the second direction, the sealing member 30 heats and presses the area to be sealed along the first direction, and since the heating and pressing direction by the sealing member 30 coincides with the bent direction of the distal end of the separator in the electrode assembly, wrinkling of the separator may be prevented during the sealing process of the battery case.

## Claims

1. An electrode assembly manufacturing method, comprising:
(a) transferring an electrode assembly (1) to a sealing position suitable for sealing by multiple sealing blocks (120; 121-124) and a pair of supports, wherein the electrode assembly (1) has a plurality of electrodes (1c) and a plurality of separators (S) alternately stacked therein, wherein the electrode assembly (1) is placed on a conveyor,
wherein the width of the conveyor is smaller than the length of the electrode assembly (1) in the longitudinal direction of the electrode assembly (1), so that both distal ends are located below the height of the conveyor by being bent downward along the longitudinal direction of the electrode assembly (1) by its own load,
(b) moving a plurality of sealing blocks (12,120) located on one side of the electrode assembly (1) in a longitudinal direction and a plurality of sealing blocks (12,120) located on the other side of the electrode assembly (1) in the longitudinal direction toward the electrode assembly (1) to a predetermined distance between the plurality of sealing blocks (12,120) on one side of the electrode assembly (1) and the plurality of sealing blocks (12,120) on the other side of the electrode assembly (1);
(c) raising both distal ends of the electrode assembly (1) disposed in the longitudinal direction of the electrode assembly (1) by a pair of lower supports (13,130) that move up toward the electrode assembly (1),
(d) bending the plurality of separators (S) disposed at both distal ends in a downward direction, wherein the downward direction is opposite to a stacking direction of the electrode assembly (1); and
(e) sealing the plurality of separators (S) while contacting the plurality of sealing blocks (12,120).

2. The electrode assembly manufacturing method of claim 1, wherein
the predetermined distance is smaller than a length of the plurality of separators (S) in the longitudinal direction and greater than a length of the plurality of electrodes (1c) in the longitudinal direction.

3. The electrode assembly manufacturing method of claim 1, wherein
in transferring the electrode assembly (1) to the sealing position, the electrode assembly (1) is transferred to the sealing position while being disposed on a conveyor (11).

4. The electrode assembly manufacturing method of claim 1, wherein
in raising both distal ends of the electrode assembly (1), the pair of lower supports (13,130) is moved up in a state in which the plurality of sealing blocks (12,120) move toward the electrode assembly (1) to the predetermined distance.

5. The electrode assembly manufacturing method of claim 1, wherein
in sealing the plurality of separators (S), the plurality of sealing blocks (12,120) heat the plurality of separators (S) in contact with the plurality of sealing blocks (12,120) to a predetermined temperature so that a binder component of the plurality of separators (S) is melted, thereby forming an adhesive strength.

6. The electrode assembly manufacturing method of claim 1, further comprising:
aligning the electrode assembly (1) between transferring the electrode assembly (1) to the sealing position and moving the plurality of sealing blocks (12,120) toward the electrode assembly (1).

7. The electrode assembly manufacturing method of claim 1, further comprising: returning the plurality of sealing blocks (12,120) to their original positions;
lowering the pair of lower supports (13,130) to an initial position; and
taking the electrode assembly (1) sealed with the plurality of separators (S) out from the sealing position.

## Patentansprüche

1. Herstellungsverfahren für eine Elektrodenanordnung, umfassend:
(a) Transferieren einer Elektrodenanordnung (1) zu einer Versiegelungsposition, welche für ein Versiegeln durch mehrere Versiegelungsblöcke (120; 121-124) und ein Paar von Trägern geeignet ist, wobei die Elektrodenanordnung (1) eine Mehrzahl von Elektroden (1c) und eine Mehrzahl von Separatoren (S) aufweist, welche abwechselnd darin gestapelt sind, wobei die Elektrodenanordnung (1) an einem Förderelement platziert ist,
wobei die Breite des Förderelements kleiner als die Länge der Elektrodenanordnung (1) in der longitudinalen Richtung der Elektrodenanordnung (1) ist, so dass beide distale Enden unterhalb der Höhe des Förderelements angeordnet sind, indem sie nach unten entlang der longitudinalen Richtung der Elektrodenanordnung (1) durch ihre eigene Last gebogen werden,
(b) Bewegen einer Mehrzahl von Versiegelungsblöcken (12, 120), welche an einer Seite der Elektrodenanordnung (1) angeordnet sind, in einer longitudinalen Richtung, und einer Mehrzahl von Versiegelungsblöcken (12, 120), welche an der anderen Seite der Elektrodenanordnung (1) angeordnet sind, in der longitudinalen Richtung zu der Elektrodenanordnung (1) hin zu einer vorbestimmten Distanz zwischen der Mehrzahl von Versiegelungsblöcken (12, 120) an einer Seite der Elektrodenanordnung (1) und der Mehrzahl von Versiegelungsblöcken (12, 120) an der anderen Seite der Elektrodenanordnung (1);
(c) Anheben von beiden distalen Enden der Elektrodenanordnung (1) , welche in der longitudinalen Richtung der Elektrodenanordnung (1) angeordnet sind, durch ein Paar von unteren Trägern (13, 130), welche sich nach oben zu der Elektrodenanordnung (1) hin bewegen,
(d) Biegen der Mehrzahl von Separatoren (S), welche an beiden distalen Enden angeordnet sind, in einer Richtung nach unten, wobei die Richtung nach unten entgegengesetzt zu einer Stapelrichtung der Elektrodenanordnung (1) ist; und
(e) Versiegeln der Mehrzahl von Separatoren (S), während die Mehrzahl von Versiegelungsblöcken (12, 120) kontaktiert werden.

2. Herstellungsverfahren für eine Elektrodenanordnung nach Anspruch 1, wobei
die vorbestimmte Distanz kleiner als eine Länge der Mehrzahl von Separatoren (S) in der longitudinalen Richtung und größer als eine Länge der Mehrzahl von Elektroden (1c) in der longitudinalen Richtung ist.

3. Herstellungsverfahren für eine Elektrodenanordnung nach Anspruch 1, wobei
beim Transferieren der Elektrodenanordnung (1) zu der Versiegelungsposition die Elektrodenanordnung (1) zu der Versiegelungsposition transferiert wird, während sie an einem Förderelement (11) angeordnet ist.

4. Herstellungsverfahren für eine Elektrodenanordnung nach Anspruch 1, wobei
beim Anheben beider distaler Enden der Elektrodenanordnung (1) das Paar von unteren Trägern (13, 130) nach oben in einem Zustand bewegt wird, in welchem sich die Mehrzahl von Versiegelungsblöcken (12, 120) zu der Elektrodenanordnung (1) hin zu der vorbestimmten Distanz bewegen.

5. Herstellungsverfahren für eine Elektrodenanordnung nach Anspruch 1, wobei
beim Versiegeln der Mehrzahl von Separatoren (S) die Mehrzahl von Versiegelungsblöcken (12, 120) die Mehrzahl von Separatoren (S) in Kontakt mit der Mehrzahl von Versiegelungsblöcken (12, 120) auf eine vorbestimmte Temperatur erwärmen, so dass eine Bindemittelkomponente der Mehrzahl von Separatoren (S) geschmolzen wird, wodurch eine Haftstärke gebildet wird.

6. Herstellungsverfahren für eine Elektrodenanordnung nach Anspruch 1, ferner umfassend:
Ausrichten der Elektrodenanordnung (1) zwischen dem Transferieren der Elektrodenanordnung (1) zu der Versiegelungsposition und dem Bewegen der Mehrzahl von Versiegelungsblöcken (12, 120) zu der Elektrodenanordnung (1) hin.

7. Herstellungsverfahren für eine Elektrodenanordnung nach Anspruch 1, ferner umfassend:
Zurückführen der Mehrzahl von Versiegelungsblöcken (12, 120) zu ihren ursprünglichen Positionen;
Absenken des Paars von unteren Trägern (13, 130) zu einer anfänglichen Position; und
Herausnehmen der Elektrodenanordnung (1), welche mit der Mehrzahl von Separatoren (S) versiegelt ist, aus der Versiegelungsposition.

## Revendications

1. Procédé de fabrication d'ensemble d'électrodes, comprenant :
(a) le transfert d'un ensemble d'électrodes (1) vers une position de scellage appropriée pour un scellage au moyen de multiples blocs de scellage (120 ; 121-124) et une paire de supports, dans lequel l'ensemble d'électrodes (1) présente une pluralité d'électrodes (1c) et une pluralité de séparateurs (S) empilés en alternance dans celui-ci, dans lequel l'ensemble d'électrodes (1) est placé sur un convoyeur,
dans lequel la largeur du convoyeur est inférieure à la longueur de l'ensemble d'électrodes (1) dans la direction longitudinale de l'ensemble d'électrodes (1), de sorte que les deux extrémités distales sont situées en dessous de la hauteur du convoyeur en étant courbées vers le bas le long de la direction longitudinale de l'ensemble d'électrodes (1) par sa propre charge,
(b) le déplacement d'une pluralité de blocs de scellage (12, 120) situés d'un côté de l'ensemble d'électrodes (1) dans une direction longitudinale et d'une pluralité de blocs de scellage (12, 120) situés de l'autre côté de l'ensemble d'électrodes (1) dans la direction longitudinale vers l'ensemble d'électrodes (1) à une distance prédéterminée entre la pluralité de blocs de scellage (12, 120) d'un côté de l'ensemble d'électrodes (1) et la pluralité de blocs de scellage (12, 120) de l'autre côté de l'ensemble d'électrodes (1) ;
(c) le soulèvement des deux extrémités distales de l'ensemble d'électrodes (1) disposées dans la direction longitudinale de l'ensemble d'électrodes (1) au moyen d'une paire de supports inférieurs (13, 130) qui se déplacent vers le haut vers l'ensemble d'électrodes (1),
(d) le pliage de la pluralité de séparateurs (S) disposés aux deux extrémités distales dans une direction vers le bas, dans lequel la direction vers le bas est opposée à une direction d'empilement de l'ensemble d'électrodes (1) ; et
(e) le scellage de la pluralité de séparateurs (S) tout en étant en contact avec la pluralité de blocs de scellage (12, 120).

2. Procédé de fabrication d'ensemble d'électrodes selon la revendication 1, dans lequel la distance prédéterminée est inférieure à une longueur de la pluralité de séparateurs (S) dans la direction longitudinale et supérieure à une longueur de la pluralité d'électrodes (1c) dans la direction longitudinale.

3. Procédé de fabrication d'ensemble d'électrodes selon la revendication 1, dans lequel lors du transfert de l'ensemble d'électrodes (1) vers la position de scellage, l'ensemble d'électrodes (1) est transféré vers la position de scellage tout en étant disposé sur un convoyeur (11).

4. Procédé de fabrication d'ensemble d'électrodes selon la revendication 1, dans lequel lors du soulèvement des deux extrémités distales de l'ensemble d'électrodes (1), la paire de supports inférieurs (13, 130) est déplacée vers le haut dans un état dans lequel la pluralité de blocs de scellage (12, 120) se déplacent vers l'ensemble d'électrodes (1) à la distance prédéterminée.

5. Procédé de fabrication d'ensemble d'électrodes selon la revendication 1, dans lequel lors du scellage de la pluralité de séparateurs (S), la pluralité de blocs de scellage (12, 120) chauffent la pluralité de séparateurs (S) en contact avec la pluralité de blocs scellage (12, 120) à une température prédéterminée de sorte qu'un composant liant de la pluralité de séparateurs (S) est fondu, formant ainsi une force adhésive.

6. Procédé de fabrication d'ensemble d'électrodes selon la revendication 1, comprenant en outre :
l'alignement de l'ensemble d'électrodes (1) entre le transfert de l'ensemble d'électrodes (1) vers la position de scellage et le déplacement de la pluralité de blocs de scellage (12, 120) vers l'ensemble d'électrodes (1).

7. Procédé de fabrication d'ensemble d'électrodes selon la revendication 1, comprenant en outre : le retour de la pluralité de blocs de scellage (12, 120) à leurs positions d'origine ;
l'abaissement de la paire de supports inférieurs (13, 130) vers une position initiale ; et le retrait de la position de scellage de l'ensemble d'électrodes (1) scellé avec la pluralité de séparateurs (S).
